(19) Europäisches Patentamt
European Patent Office
Office européen des brevets

(11) **EP 4 691 243 A1**

(12) **EUROPEAN PATENT APPLICATION**
published in accordance with Art. 153(4) EPC

(43) Date of publication:
**11.02.2026 Bulletin 2026/07**

(21) Application number: 24780368.7

(22) Date of filing: 26.03.2024

(51) International Patent Classification (IPC):
*A01N 59/00* (2006.01)        *A01N 25/12* (2006.01)
*A01P 3/00* (2006.01)         *C01B 21/068* (2006.01)
*C04B 35/584* (2006.01)

(52) Cooperative Patent Classification (CPC):
A01N 25/12; A01N 59/00; A01P 3/00;
C01B 21/068; C04B 35/584

(86) International application number:
**PCT/JP2024/012068**

(87) International publication number:
**WO 2024/204260 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 27.03.2023 JP 2023050284

(71) Applicant: **Denka Company Limited**
**Tokyo 103-8338 (JP)**

(72) Inventors:
• **MIYATA, Kenji**
  **Tokyo 103-8338 (JP)**
• **EMOTO, Hideyuki**
  **Tokyo 103-8338 (JP)**

(74) Representative: **Hoffmann Eitle**
**Patent- und Rechtsanwälte PartmbB**
**Arabellastraße 30**
**81925 München (DE)**

(54) **ANTIBACTERIAL AGENT AND METHOD FOR USING COMPOSITION CONTAINING SILICON NITRIDE AS ANTIBACTERIAL AGENT**

(57)    To provide: an antibacterial agent having excellent antibacterial properties; and a method for using a composition containing silicon nitride as an antibacterial agent having excellent antibacterial properties. The antibacterial agent contains silicon nitride as a main component and has a fluorine content of 900 mass ppm or less. In the method for using a composition containing silicon nitride as an antibacterial agent, there is used a composition that contains silicon nitride as a main component and has a fluorine content of 900 mass ppm or less.

**EP 4 691 243 A1**

**Description**

**TECHNICAL FIELD**

The present disclosure relates to an antibacterial agent and a method for using a composition containing silicon nitride as an antibacterial agent.

**BACKGROUND**

Silicon nitride is a material that has excellent strength, hardness, toughness, heat resistance, corrosion resistance, and thermal shock resistance, etc., and therefore, is used in components in various kinds of structures. As well as the foregoing characteristics, silicon nitride is also known for having antibacterial properties and biocompatibility (Patent Documents 1 and 2). Patent Document 1 proposes changing surface chemical characteristics in order to improve the antibacterial properties of a biomedical implant block which includes a silicon nitride ceramic material. Patent Document 2 proposes: filling silicon nitride in a biomedical implant of polyether ether ketone (PEEK), or the like; and providing a silicon nitride coating.

**CITATION LIST**

**PATENT LITERATURE**

Patent Document 1: JP 2015-516239 A

Patent Document 2: JP 2020-512072 A

**SUMMARY OF INVENTION**

**TECHNICAL PROBLEM**

Although it is known that silicon nitride has antibacterial properties, characteristics as an antibacterial agent are still not adequate. Thus, the present disclosure provides an antibacterial agent having excellent antibacterial properties. The present disclosure provides a method for using a composition containing silicon nitride as an antibacterial agent having excellent antibacterial properties.

**SOLUTION TO PROBLEM**

One aspect of the present disclosure provides the antibacterial agent described below.

[1] An antibacterial agent containing silicon nitride as a main component and having a fluorine content of 900 mass ppm or less.

The antibacterial properties of silicon nitride change depending on the fluorine content. The antibacterial agent described above has a fluorine content of 900 mass ppm or less, and therefore, has excellent antibacterial properties.

The antibacterial agent described in [1] may also be any one of [2] to [8] below. The antibacterial agents below have even more excellent antibacterial properties.

[2] The antibacterial agent described in [1], wherein the antibacterial agent is granular and has a BET specific surface area of 0.5 $m^2$/g or more.

[3] The antibacterial agent described in [1] or [2], wherein when dispersed in water so as to have a concentration of 6.0 w/v%, after ten minutes have elapsed, a fluorine elution amount to a liquid phase is 250 mass ppm or less.

[4] The antibacterial agent described in [3], wherein the liquid phase has a pH of 7.0 or more.

[5] The antibacterial agent described in any one of [1] to [4], wherein when dispersed in water so as to have a concentration of 6.0 w/v%, after ten minutes have elapsed, a content of ammonium ions included in the liquid phase is 6.0 μg/mL or less and a content of ammonia included in the liquid phase is 0.2 μg/mL or more.

[6] The antibacterial agent described in [5], wherein a ratio of the content of ammonia to the content of ammonium ions is 0.10 or more.

[7] The antibacterial agent described in any one of [1] to [6], wherein the fluorine content is 10 mass ppm or more.

[8] The antibacterial agent described in any one of [1] to [7], having a chlorine content of 30 mass ppm or more. One aspect of the present disclosure provides the method described below.

[9] A method for using a composition that contains silicon nitride as a main component and has a fluorine content of 900 mass ppm or less as an antibacterial agent.

The antibacterial properties of silicon nitride change depending on the fluorine content. The composition described above contains silicon nitride as a main component and has a fluorine content of 900 mass ppm or less, and therefore, has excellent antibacterial properties. Such a composition has excellent antibacterial properties, and therefore, is preferred as an antibacterial agent.

## EFFECTS OF INVENTION

According to the present disclosure, it is possible to provide an antibacterial agent having excellent antibacterial properties. It is possible to provide a method for using a composition containing silicon nitride as an antibacterial agent having excellent antibacterial properties.

## DESCRIPTION OF EMBODIMENTS

Hereinafter, embodiments of the present disclosure will be described. However, the following embodiments are examples disclosed in order to describe the present disclosure and are not intended to limit the present disclosure to the details described below. It should be noted that numerical value ranges shown using a hyphen "-" include the lower limit value and the upper limit value. That is, a numerical value range shown as "A-B" means A or more and B or less. Numerical value ranges in which the upper limit or lower limit thereof has been replaced with a numerical value from the examples are also included in the present disclosure. When a plurality of materials are disclosed as examples, one of the materials may be used alone or a plurality thereof may be used in combination.

An antibacterial agent in one embodiment contains silicon nitride as a main component and has a fluorine content of 900 mass ppm or less. The antibacterial agent may, for example, be granular, may be a powder configured by aggregating a plurality of particles, and may be a solid body such as a film, etc. In the present disclosure, a "silicon nitride powder" refers to a powder having a silicon nitride content of 90 mass% or more. Such a silicon nitride powder may be an antibacterial agent. In the present disclosure, when a plurality of components are included, "main component" refers to a component with the largest content. A component other than the "main component" is referred to as an "accessory component". The antibacterial agent may consist solely of a main component or may include a main component and an accessory component.

The content of the silicon nitride in the antibacterial agent may be 90 mass% or more, 95 mass% or more, 98 mass% or more, 99 mass% or more, 99.5 mass% or more, or 99.7 mass% or more. The antibacterial performance of the antibacterial agent tend to improve with a higher content of silicon nitride therein. Examples of an accessory component included in the antibacterial agent include fluorine, chlorine, oxygen, iron, aluminum, and calcium, etc. The foregoing may also form a compound.

The fluorine content in the antibacterial agent may be 700 mass ppm or less, 500 mass ppm or less, 300 mass ppm or less, 250 mass ppm or less, 100 mass ppm or less, or 60 mass ppm or less. Antibacterial performance tend to improve with a low fluorine content. One factor therefor is thought to be that with a low fluorine content, when hydrolysis occurs due to coming into contact with water, the ratio of ammonia ($NH_3$) with respect to ammonium ions ($NH_4^+$) increases.

The fluorine content in the antibacterial agent varies depending on raw material constitution when producing the antibacterial agent, and on whether or not a surface treatment is performed. For example, it is possible to lower the fluorine content by sufficiently washing the antibacterial agent using a washing liquid such as water, etc. The fluorine content in the antibacterial agent may be 10 mass ppm or more, 20 mass ppm or more, or 30 mass ppm or more. Setting such a content makes it possible to lower antibacterial agent production costs. As an example, the fluorine content in the antibacterial agent may be 10-900 mass ppm.

The chlorine content in the antibacterial agent may be 30 mass ppm or more, 50 mass ppm or more, 100 mass ppm or more, 300 mass ppm or more, 400 mass ppm or more, or 500 mass ppm or more. With a high chlorine content, antibacterial performance tends to improve, particularly with respect to Gram-negative bacteria.

The chlorine content in the antibacterial agent varies depending on raw material constitution when producing the antibacterial agent and on whether or not a particle surface treatment is performed. For example, when the raw materials used to synthesize silicon nitride have a high chlorine content, there is a tendency for the content of chlorine in the antibacterial agent to be high. The chlorine content in the antibacterial agent may be 1000 mass ppm or less, 800 mass ppm or less, or 700 mass ppm or less. Setting such a content makes it possible to suppress chlorine-derived corrosion. As an example, the chlorine content in the antibacterial agent may be 30-1000 mass ppm.

The oxygen content in the antibacterial agent may be 2.0 mass% or less, 1.5 mass% or less, or 1.0 mass% or less. Oxygen may, for example, be included as silicon dioxide ($SiO_2$). With a low oxygen content in the antibacterial agent, antibacterial performance tends to improve.

The oxygen content in the antibacterial agent varies depending on raw material constitution when producing the antibacterial agent and on firing atmosphere. For example, if the oxygen concentration in a firing atmosphere is made low when synthesizing the silicon nitride by a direct nitridation method, there is a tendency for the oxygen content in the antibacterial agent to be low. The oxygen content in the antibacterial agent may be 0.2 mass% or more, 0.4 mass% or more, or 0.5 mass% or more. Setting such a content enables the use of low purity raw materials and gas and makes it possible to lower antibacterial agent production costs. As an example, the oxygen content in the antibacterial agent may be 0.2-2.0 mass%.

The total content of aluminum, iron, and calcium in the antibacterial agent may be 2000 mass ppm or less or 1800 mass ppm or less. By reducing the total content of aluminum, iron, and calcium, the silicon nitride content increases, and thus, antibacterial performance tends to improve. The total content of aluminum, iron, and calcium in the antibacterial agent may be 10 mass ppm or more, 50 mass ppm or more, 500 mass ppm or more, or 1000 mass ppm or more. Setting such a content enables the use of low purity raw materials and makes it possible to lower antibacterial agent production costs. As an example, the total content of aluminum, iron, and calcium in the antibacterial agent may be 10-2000 mass ppm.

The respective contents of fluorine, chlorine, oxygen, aluminum, iron, and calcium in the antibacterial agent can be measured by a method described in the examples. The antibacterial agent may contain an accessory component other than those described above.

The silicon nitride may have an $\alpha$ conversion ratio (phase ratio of $\alpha$-$Si_3N_4$ with respect to $Si_3N_4$) of 80% or more, 85% or more, 88% or more, or 90% or more. If the $\alpha$ conversion ratio is made high, there is a tendency for antibacterial performance to improve with respect to Gram-negative bacteria. The silicon nitride $\alpha$ conversion ratio may be 99% or less, 97% or less, or 96% or less. Setting such a value makes it possible to lower antibacterial agent production costs. As an example, the silicon nitride $\alpha$ conversion ratio may be 80-99%. The silicon nitride $\alpha$ conversion ratio can be adjusted by, for example, changing firing conditions (for example, firing temperature and firing time) when performing firing to synthesize silicon nitride.

When the antibacterial agent is powdery, with a small primary particle and a large specific surface area, there is a tendency for antibacterial performance to improve. This is thought to be because with a large specific surface area, when brought into contact with water, the amount of ammonia generated increases. The BET specific surface area of the antibacterial agent may be 0.5 m$^2$/g or more, 1.0 m$^2$/g or more, 2.0 m$^2$/g or more, 5.0 m$^2$/g or more, or 7.0 m$^2$/g or more. The BET specific surface area can be adjusted by changing firing conditions (for example, firing temperature and firing time) when synthesizing silicon nitride, and the size of the raw material powder. The BET specific surface area of the antibacterial agent may be 20 m$^2$/g or less, 15 m$^2$/g or less, or 10 m$^2$/g or less. Setting such a value makes it possible to improve the handleability of the antibacterial agent. As an example, the BET specific surface area is 0.5-20 m$^2$/g. The BET specific surface area can be measured by a method described in the examples.

When the antibacterial agent is a powder (silicon nitride powder), the average particle diameter (D50, median diameter) may be 20 $\mu$m or less, 10 $\mu$m or less, 3 $\mu$m or less, or 1 $\mu$m or less. With a small average particle diameter, antibacterial performance tends to improve. This is thought to be because with a small average particle diameter, ammonia elution increases due to hydrolysis when brought into contact with water. From the perspective of ease of production and the perspective of improved handleability, the average particle diameter may be 0.2 $\mu$m or more, 0.3 $\mu$m or more, or 0.5 $\mu$m or more. As an example, the average particle diameter is 0.2-20 $\mu$m. A particle diameter distribution is measured in compliance with the method described in "particle diameter analysis laser - diffraction/scattering method" of JIS Z 8825: 2013. In a particle diameter distribution (cumulative distribution) with a logarithmic scale particle diameter [$\mu$m] shown on the horizontal axis and frequency [vol.%] shown on the vertical axis, the particle diameter at which an integrated value from a small particle diameter reaches 50% of the total is the average particle diameter (D50) described above.

In the particle diameter distribution described above, a particle diameter (D10) at which an integrated value from a small particle diameter reaches 10% of the total may be 0.1-5 $\mu$m or 0.1-0.5 $\mu$m. In the particle diameter distribution described above, a particle diameter (D90) at which an integrated value from a small diameter reaches 90% of the total may be 0.8-5.0 $\mu$m or 1.0-3.0 $\mu$m. D10, D50, and D90 can be adjusted by, for example, changing firing conditions (for example, firing temperature and firing time) when performing firing to synthesize silicon nitride, or by changing grinding conditions after firing.

When the antibacterial agent is dispersed in water so as to have a concentration of 6.0 w/v%, after ten minutes have elapsed, an elution amount of fluorine eluted from the antibacterial agent to the liquid phase (water phase) may be 250 mass ppm or less, 200 mass ppm or less, 100 mass ppm or less, 70 mass ppm or less, 30 mass ppm or less, or 10 mass ppm or less. With a small fluorine elution amount, antibacterial performance tends to improve. One factor therefor is thought to be that with a small fluorine elution amount, the ratio of ammonia with respect to ammonium ions in the liquid phase tends to increase.

The fluorine elution amount varies depending on the fluorine content near the surface of the antibacterial agent. For example, it is possible to lower the fluorine elution amount by sufficiently washing the antibacterial agent using a washing liquid such as water, etc. The fluorine elution amount may be 1 mass ppm or more, 3 mass ppm or more, or 5 mass ppm or more. Setting such a value makes it possible to lower antibacterial agent production costs. As an example, the fluorine elution amount is 1-250 mass ppm. When the antibacterial agent is dispersed in water so as to have a concentration of 3.6 w/v%, after ten minutes have elapsed, an elution amount of fluorine eluted from the antibacterial agent to the liquid phase (water phase) may also be in the ranges described above.

When the antibacterial agent is dispersed in water so as to have a concentration of 6.0 w/v%, after ten minutes have elapsed, an elution amount of chlorine eluted from the antibacterial agent to the liquid phase (water phase) may be 10 mass ppm or more, 20 mass ppm or more, or 40 mass ppm or more. With a large chlorine elution amount, antibacterial performance tends to improve, particularly with respect to Gram-negative bacteria.

The chlorine elution amount varies depending on the chlorine content near the surface of the antibacterial agent. The chlorine content near the surface of the antibacterial agent varies depending on raw material constitution when producing the antibacterial agent. For example, with a high content of chlorine in the raw materials, the chlorine elution amount tends to be large. The chlorine elution amount may be 200 mass ppm or less, 100 mass ppm or less, or 80 mass ppm or less. Setting such an amount makes it possible to suppress chlorine-derived corrosion. As an example, the chlorine elution amount is 10-200 mass ppm. As an example, the fluorine elution amount may be 1-250 mass ppm. When the antibacterial agent is dispersed in water so as to have a concentration of 3.6 w/v%, after ten minutes have elapsed, an elution amount of chlorine eluted from the antibacterial agent to the liquid phase (water phase) may also be in the ranges described above.

An elution amount herein is synonymous with a content in a liquid phase. Accordingly, an elution amount to a liquid phase is determined by measuring a content in the liquid phase. The elution amount is obtained under conditions of atmospheric pressure and a temperature of 20°C. Measurement can be performed by a method described in the examples. Herein, the unit "w/v%" is synonymous with "g/100 mL".

When the antibacterial agent is dispersed in water so as to have a concentration of 6.0 w/v%, after ten minutes have elapsed, the pH of the liquid phase (water phase) is 7.0 or more, 7.5 or more, 8.0 or more, or 8.5 or more. By setting such a value, the ratio of ammonia ($NH_3$) with respect to ammonium ions ($NH_4^+$) in the liquid phase increases and antibacterial performance can be improved. The pH of the liquid phase may be 10 or less or 9.5 or less. The pH of the liquid phase can be adjusted by changing the constitution of the surface of the antibacterial agent. For example, if the antibacterial agent undergoes a hydrofluoric acid treatment, the pH tends to become lower, and thereafter, if washed with water, etc., the pH tends to become higher. As an example, the pH of the liquid phase may be 7.0-10.0. When the antibacterial agent is dispersed in water so as to have a concentration of 3.6 w/v%, after ten minutes have elapsed, the pH of the liquid phase (water phase) may also be in the ranges described above.

When the antibacterial agent is dispersed in water so as to have a concentration of 6.0 w/v%, after ten minutes have elapsed, the content of ammonium ions included in the liquid phase may be 6.0 $\mu$g/mL or less, 5.0 $\mu$g/mL or less, or 4.0 $\mu$g/mL or less. If the content of ammonium ions in the liquid phase is reduced, the content of ammonia in the liquid phase can be increased. Doing so makes it possible to improve the antibacterial performance of the antibacterial agent. The content of ammonium ions may be 0.5 $\mu$g/mL or more or 1.0 $\mu$g/mL or more. As an example, the range of the content of ammonium ions included in the liquid phase may be 0.5-6.0 $\mu$g/mL. When the antibacterial agent is dispersed in water so as to have a concentration of 3.6 w/v%, after ten minutes have elapsed, the content of ammonium ions included in the liquid phase may also be in the ranges described above.

When the antibacterial agent is dispersed in water so as to have a concentration of 6.0 w/v%, after ten minutes have elapsed, the content of ammonia included in the liquid phase may be 0.2 $\mu$g/mL or more, 0.3 $\mu$g/mL or more, or 0.4 $\mu$g/mL or more. Such an antibacterial agent tends to have even more excellent antibacterial properties. The ammonia content may be 2.0 $\mu$g/mL or less or 1.0 $\mu$g/mL or less. As an example, the range of the content of ammonia included in the liquid phase is 0.2-1.0 $\mu$g/mL. When the antibacterial agent is dispersed in water so as to have a concentration of 3.6 w/v%, after ten minutes have elapsed, the content of ammonia included in the liquid phase may also be the in the ranges described above.

A ratio ($NH_3/NH_4^+$) of the content of ammonia with respect to the content of ammonium ions in the liquid phase may be 0.10 or more, 0.12 or more, or 0.14 or more. Such an antibacterial agent tends to have even more excellent antibacterial properties. The above ratio ($NH_3/NH_4^+$) may be 1.0 or less or 0.5 or less. The contents of ammonia and ammonium ions in the liquid phase and the pH are measured by methods described in the examples under conditions of atmospheric pressure and a temperature of 20°C.

When the antibacterial agent is dispersed in water so as to have a concentration of 6.0 w/v%, after ten minutes have elapsed, the zeta potential of the liquid phase may be -10 mV or less, -20 mV or less, -30 mV or less, or -40 mV or less. Such an antibacterial agent has both excellent antibacterial properties and excellent biocompatibility. When the antibacterial agent is dispersed in water so as to have a concentration of 3.6 w/v%, after ten minutes have elapsed, the zeta potential of the liquid phase may also be in the ranges described above.

A powdery antibacterial agent can, for example, be prepared by subjecting a silicon nitride powder obtained by a publicly-known method such as direct nitridation, imide thermal decomposition, or combustion synthesis, etc., to a surface treatment and washing with water, as required. However, the production method is not particularly limited. As an antibacterial agent, the prepared silicon nitride powder can be dispersed in a resin or adhered to a fiber to produce antibacterial products of various forms.

The antibacterial agent of the present embodiment has excellent antibacterial properties with respect to both Gram-positive bacteria and Gram-negative bacteria. The antibacterial agent can also be referred to as an antibacterial composition. The form of the antibacterial agent is not particularly limited and may, for example, be a powder, bulk, thin film, or coating. A powdery antibacterial agent may be dispersed in a matrix such as a film or filter, etc. The antibacterial agent has excellent antibacterial properties and also has biocompatibility. Due thereto, the antibacterial agent can, for example, be coated on a biomedical implant.

A method according to one embodiment is a method for using a composition that contains silicon nitride as a main component and has a fluorine content of 900 mass ppm or less as an antibacterial agent. The composition contains silicon nitride as a main component. The contents of the main component and accessory components are as described in the embodiment of an antibacterial agent. The details described in the embodiment of an antibacterial agent also apply to the use method of the present embodiment. That is, the composition may contain the same components as the antibacterial agent described above and may have the same form and characteristics as the antibacterial agent described above. The form of the composition is not particularly limited and may, for example, be a powder, bulk, thin film, or coating. A powdery composition may be dispersed in a matrix such as a film or filter, etc. The composition used in the method of the present embodiment has excellent antibacterial properties, and therefore, can be preferably used as an antibacterial agent.

Embodiments of the present disclosure were explained above, but the present disclosure is not in any way limited to the above embodiments.

## EXAMPLES

The features of the present disclosure are explained in more detail with reference to examples and comparative examples. However, the present disclosure is not limited to the examples below.

(Example 1)

[Preparation of antibacterial agent]

A raw material was prepared by blending a silicon powder and calcium fluoride. At that time, the calcium fluoride was blended at a ratio of 1.5 mass% with respect to the silicon powder. The raw material was used to fabricate a compact (bulk density: 1.4 g/cm³), and the compact was fired for 60 hours at 1400°C using an electric furnace to fabricate a silicon nitride ingot. The atmosphere during firing was rendered so as to be a mixed atmosphere of nitrogen and hydrogen ($N_2$:$H_2$=80:20, volumetric basis). The obtained ingot was coarse ground and then wet ground in a ball mill.

A post-treatment was performed in which the silicon nitride powder obtained by the wet grinding was immersed in hydrofluoric acid (concentration: 10 mass%) for two hours at a temperature of 60°C. Thereafter, the silicon nitride powder was extracted from the hydrofluoric acid, washed with water, and dried in a nitrogen atmosphere. Thus, the silicon nitride powder (antibacterial agent) of Example 1 was obtained.

[Evaluation of antibacterial agent]

<Fluorine and chlorine contents>

The respective contents of fluorine and chlorine included in the silicon nitride powder were measured using the procedure described below. An automatic sample combustion device (device name: AQF-2100H, manufactured by Mitsubishi Chemical Corporation) was used to heat the silicon nitride powder and gas that was generated was dissolved in water. An ion chromatograph (device name: ICS-2100, manufactured by Thermo Fisher Scientific Inc.) was used to measure fluorine and chlorine dissolved in the water in compliance with JIS 1603: 2007. The quantities of fluorine and chlorine included in the silicon nitride powder were determined on the basis of values obtained by the foregoing measurement. Measurement results were as shown in Table 1.

<Fe, Al, and Ca contents>

An X-ray fluorescence spectrometer (device name: ZSX-Primus **II,** manufactured by Rigaku Corporation) was used to measure the respective contents of Fe (iron), Al (aluminum), and Ca (calcium) in the silicon nitride powder. Each of the contents is shown in Table 1.

<Oxygen content>

0.01 g of the silicon nitride powder and 0.01 g of a carbon powder were set in an oxygen/nitrogen analysis device (device name: EMGA-920, manufactured by Horiba, Ltd). The temperature was increased from 20°C to 2400°C at a temperature increase rate of 8°C/second in a helium gas atmosphere. Oxygen and nitrogen generated as the temperature increased were detected. A surface oxygen amount and an inner oxygen amount were determined from respective peak areas derived from desorption of surface oxygen and internal oxygen. Oxygen content was calculated on the basis of the sum of the obtained values. The results are shown in Table 1.

<$\alpha$ conversion ratio>

The $\alpha$ conversion ratio of the silicon nitride was measured using the procedure described below. An X-ray diffraction device (device name: Ultima IV, manufactured by Rigaku Corporation) was used to perform X-ray diffraction on the silicon nitride using a CuKa beam. An $\alpha$ phase was represented by a diffraction beam intensity $I_{a102}$ of a (102) surface and a diffraction beam intensity $I_{a210}$ of a surface (210), and a $\beta$ phase was represented by a diffracted beam intensity $I_{b101}$ of a (101) surface and a diffraction beam intensity $I_{b210}$ of the (210) surface. The diffraction beam intensities were used to calculate the $\alpha$ conversion ratio by the formula below. The results are shown in Table 1.

$$\alpha \text{ conversion ratio (\%)} = (I_{a102}+I_{a210})/(I_{a102}+I_{a210}+I_{b101}+I_{b210})\times100$$

<BET specific surface area>

The BET specific surface area of the silicon nitride powder was measured by a single point BET method using nitrogen gas in compliance with JIS Z 8830: 2013 "Method for measuring specific surface area of powder (solid) by gas adsorption". The results are shown in the "SSA" row in Table 1.

<Particle diameter distribution>

The particle diameter distribution of the silicon nitride powder was measured by a laser diffraction/scattering method. Measurement was performed in compliance with the method described in JIS Z 8825: 2013 "Particle diameter analysis laser diffraction/scattering method". In a particle diameter distribution (cumulative distribution) with a logarithmic scale particle diameter [$\mu$m] shown on the horizontal axis and frequency [vol.%] shown on the vertical axis, the particle diameters at which an integrated value from a small particle diameter reaches 10%, 50%, and 90% of the total were respectively determined as D10, D50, and D90. The results are shown in Table 1.

<Evaluation of liquid phase>

30 mL of distilled water was put into a vial having a capacity of 50 mL. 1.8 g of the silicon nitride powder was put into the vial and stirred for 30 seconds to obtain a dispersion liquid. Thereafter, the lid of the vial was closed and the dispersion liquid was left for ten minutes. After ten minutes had elapsed, a membrane filter (manufactured by Millipore Corp.) having a mesh size of 0.45 $\mu$m was used to filter the dispersion liquid to obtain a filtrate (liquid phase). The foregoing actions were performed at atmospheric pressure in a 20°C environment.

The respective quantities of fluorine, chlorine, ammonia ($NH_3$), and ammonium ions ($NH_4^+$) in the filtrate were determined by an ion chromatograph (device name: ICS-2100, manufactured by Thermo Fisher Scientific Inc.). A pH meter (device name: FP20-Std-Kit, manufactured by Mettler Toledo) was used to measure the pH of the filtrate. A zeta potential analyzer (device name: ELSZneo, manufactured by Otsuka Electronics Co., Ltd.) was used to measure the zeta potential of the filtrate. The contents of fluorine, chlorine, ammonia ($NH_3$), and ammonium ions ($NH_4^+$) in the filtrate, and the pH and zeta potential are shown in Table 1. A ratio ($NH_3/NH_4^+$) of the content of ammonia with respect to the content of ammonium ions is also shown in Table 1.

<Evaluation of antibacterial properties>

A bacterial suspension ($1 \times 10^5$ to $1 \times 10^6$ CFU/mL) was prepared by pre-culturing bacteria *(Staphylococcus aureus)* in a BHI liquid culture medium. A 15 w/v% dispersion liquid was obtained by putting 0.15 g of the silicon nitride powder and 1 mL of distilled water into a microtube. After sterilizing the microtube with ultraviolet light, 1 mL of the bacterial suspension described above was added to the microtube. Then, after mixing for five minutes at room temperature (approximately 20°C) in a tube rotator, the supernatant was collected and the amount of viable bacteria was measured by using a WST-8 assay (absorbance of 450 nm). Viability was measured in the same manner when *Staphylococcus epidermidis* or when *Escherichia coli* was used as the bacteria. The results are shown in Table 1. Viability results when the silicon nitride powder was not used are shown in the "ref" column of Table 1.

(Example 2)

Air inside a vertical reaction tank was replaced with nitrogen gas and then liquid ammonia and toluene were introduced. Inside the vertical reaction tank, the liquid ammonia and the toluene separated into, respectively, an upper layer and a lower layer. A toluene solution including silicon tetrachloride at a concentration of 20-35 mass% with the remainder being toluene was slowly supplied, through a conduit attached to the vertical reaction tank, to the lower layer as the lower layer was stirred. When the toluene solution was supplied, a white reaction product (silicon diimide) precipitated near the interface of the upper and lower layers. Upon completion of the reaction, the reaction liquid inside the vertical reaction tank was transferred to a filtration tank and the product was filtered. The product was washed with liquid ammonia to purify the silicon diimide. The purified silicon diimide was decomposed by being heated at approximately 1500°C in a nitrogen atmosphere to obtain a silicon nitride powder. The silicon nitride powder was used as the silicon nitride powder (antibacterial agent) of Example 2. An evaluation of the silicon nitride powder was carried out using the same procedure as Example 1. Each of the evaluation results was as shown in Table 1.

(Comparative Example 1)

A commercially sold silicon nitride powder (product name: HP for PV, manufactured by Höganäs) was used as the silicon nitride powder (antibacterial agent) of Comparative Example 1. An evaluation of the silicon nitride powder was carried out using the same procedure as Example 1. Each of the evaluation results was as shown in Table 1.

(Example 3)

A metallic silicon powder with a particle diameter of 5 $\mu$m and a silicon nitride powder with a particle diameter of 0.1 $\mu$m were weighed so as to obtain a molar ratio of $Si:Si_3N_4$=2:0.4. The powders were mixed for 12 hours in methanol using balls made of silicon nitride and a container made of polyethylene. The obtained slurry underwent filtration separation and was then vacuum-dried at 100°C to obtain a pre-mixed powder. Approximately 10 g of the pre-mixed powder was loaded into a porous refractory container and then underwent combustion synthesis in a 10 MPa nitrogen atmosphere using a high-pressure container of an HIP device.

The loaded powder was ignited by heat generated by the self-combustion of Ti upon nitriding when 20 mm-diameter Ti pellets placed on top of the powder were strongly heated for several seconds using a ribbon-shaped carbon heater. The product created by the combustion was significantly aggregated due to the high temperature during the combustion synthesis. Further, the particles included in the product had themselves also undergone grain growth. Approximately 100 g of the product was wet ground for 72 hours in methanol using balls made of silicon nitride and a container made of polyethylene to obtain a slurry. After performing filtration separation on the slurry, the obtained solid content was vacuum dried at 100°C to obtain a silicon nitride powder. The silicon nitride powder was used as the silicon nitride powder (antibacterial agent) of Example 3. An evaluation of the silicon nitride powder was carried out using the same procedure as Example 1. Each of the evaluation results was as shown in Table 1.

(Example 4)

The silicon nitride powder of Example 3 was ground using a planetary ball mill (device name: PM100, manufactured by Retsch). The grinding time was 60 minutes. The ground silicon nitride powder was used as the silicon nitride powder (antibacterial agent) of Example 4. Each of the evaluation results was as shown in Table 1.

(Comparative Example 2)

A commercially sold silicon nitride powder (product name: M11, manufactured by Höganäs) was used as the silicon nitride powder (antibacterial agent) of Comparative Example 2. An evaluation of the silicon nitride powder was carried out using the same procedure as Example 1. Each of the evaluation results was as shown in Table 2.

(Example 5)

0.6 g of the silicon nitride powder of Comparative Example 2 and 10 g of distilled water were mixed and stirred for 30 minutes in atmospheric pressure at room temperature (approximately 20°C). After stirring, a membrane filter having a mesh size of 0.45 μm was used to filter the dispersion liquid. The powder obtained in such a manner by washing once with distilled water was used as the silicon nitride powder (antibacterial agent) of Example 5. An evaluation of the silicon nitride powder was carried out using the same procedure as Example 1. Each of the evaluation results was as shown in Table 2.

(Example 6)

A powder obtained by performing two repetitions of the washing by distilled water carried out in Example 5 was used as the silicon nitride powder (antibacterial agent) of Example 6. An evaluation of the silicon nitride powder was carried out using the same procedure as Example 1. Each of the evaluation results was as shown in Table 2.

(Example 7)

A powder obtained by performing three repetitions of the washing by distilled water carried out in Example 5 was used as the silicon nitride powder (antibacterial agent) of Example 7. An evaluation of the silicon nitride powder was carried out using the same procedure as Example 1. Each of the evaluation results was as shown in Table 2.

(Example 8)

A powder obtained by performing four repetitions of the washing by distilled water carried out in Example 5 was used as the silicon nitride powder (antibacterial agent) of Example 8. An evaluation of the silicon nitride powder was carried out using the same procedure as Example 1. Each of the evaluation results was as shown in Table 2.

[TABLE 1]

| SAMPLE | ITEM | UNIT | REF | EX 1 | EX 2 | COMP EX 1 | EX 3 | EX 4 |
|---|---|---|---|---|---|---|---|---|
| ANTIBACTERIAL AGENT | α CONVERSION RATIO | % | - | 91.0% | 95.2% | 10.3% | 0.0% | 0.0% |
| | D10 | μm | - | 0.21 | 0.16 | 0.19 | 4.82 | 0.30 |
| | D50 | μm | - | 0.72 | 0.84 | 0.93 | 15.93 | 1.10 |
| | D90 | μm | - | 1.14 | 1.53 | 3.79 | 31.85 | 1.80 |
| | SSA | m$^2$/g | - | 8.04 | 11.11 | 7.62 | 0.47 | 5.27 |
| | OXYGEN AMOUNT | MASS% | - | 0.94 | 1.17 | 1.09 | 0.51 | 1.21 |
| | F | MASS PPM | - | 36 | 59 | 1000 | 10 | 240 |
| | Cl | MASS PPM | - | 680 | 54 | N.D. | 5 | 36 |
| | Al | MASS PPM | - | 380 | 10 | N.D. | 430 | 425 |
| | Fe | MASS PPM | - | 160 | 10 | 11 | 480 | 442 |
| | Ca | MASS PPM | - | 1000 | <1.5 | 3 | 5 | 4 |

(continued)

| SAMPLE | ITEM | UNIT | REF | EX 1 | EX 2 | COMP EX 1 | EX 3 | EX 4 |
|---|---|---|---|---|---|---|---|---|
| LIQUID PHASE | F | MASS PPM | - | 8 | N.D. | 240 | 10 | 24 |
| | Cl | MASS PPM | - | 63 | N.D. | N.D. | N.D. | 18 |
| | $NH_3$ | µg/mL | - | 0.55 | 0.65 | 0.01 | 0.32 | 1.03 |
| | $NH_4^+$ | µg/mL | - | 3.66 | 2.97 | 10.28 | 1.22 | 2.83 |
| | $NH_3/NH_4^+$ | | | 0.15 | 0.22 | 0.00 | 0.26 | 0.36 |
| | pH | | - | 8.61 | 8.86 | 6.22 | 8.92 | 9.37 |
| | ZETA POTENTIAL | mV | - | -41.5 | -42.0 | 5.3 | | - |
| ANTIBACTERIAL PROPERTIES | STAPHYLOCOCCUS AUREUS | | 0.72 | 0.02 | 0.05 | 0.24 | 0.18 | 0.02 |
| | STAPHYLOCOCCUS EPIDERMIDIS | | 2.00 | 0.05 | 0.05 | 0.25 | - | - |
| | ESCHERICHIA COLI | | 0.50 | 0.05 | 0.17 | 0.24 | - | - |

[TABLE 2]

| SAMPLE | ITEM | UNIT | COMP EX 2 | EX 5 | EX 6 | EX 7 | EX 8 |
|---|---|---|---|---|---|---|---|
| ANTIBACTERIAL AGENT | α CONVERSION RATIO | % | 88.6% | ← | ← | ← | ← |
| | D10 | µm | 0.13 | ← | ← | ← | ← |
| | D50 | µm | 0.40 | ← | ← | ← | ← |
| | D90 | µm | 0.89 | ← | ← | ← | ← |
| | SSA | $m^2/g$ | 11.45 | ← | ← | ← | ← |
| | OXYGEN AMOUNT | MASS% | 1.54 | - | - | - | - |
| | F | MASS PPM | 1400 | 820 | 700 | 520 | 240 |
| | Cl | MASS PPM | N.D. | - | - | - | - |
| | Al | MASS PPM | 13 | - | - | - | - |
| | Fe | MASS PPM | 7 | - | - | - | - |
| | Ca | MASS PPM | 13 | - | - | - | - |
| LIQUID PHASE | F | MASS PPM | 320 | 170 | 142 | 72 | 63 |
| | Cl | MASS PPM | 23 | - | - | - | - |
| | $NH_3$ | µg/mL | 0.00 | 0.00 | 0.49 | 0.52 | 0.78 |
| | $NH_4^+$ | µg/mL | 18.45 | 9.44 | 4.24 | 2.44 | 2.88 |
| | $NH_3/NH_4^+$ | | 0.00 | 0.00 | 0.12 | 0.21 | 0.27 |
| | pH | | 4.26 | 5.20 | 7.30 | 8.80 | 9.20 |
| | ZETA POTENTIAL | mV | 20.3 | - | - | - | - |
| ANTIBACTERIAL PROPERTIES | STAPHYLOCOCCUS AUREUS | | 0.32 | - | - | - | - |
| | STAPHYLOCOCCUS EPIDERMIDIS | | 0.28 | - | - | - | - |
| | ESCHERICHIA COLI | | 0.32 | - | - | - | - |

In Tables 1 and 2, "-" means not measured, "N.D." means lower than a detection lower limit, and "←" means the same value as in the column to the left. As shown in Table 1, the antibacterial agent (silicon nitride powder) of each example in which the content of F included in the antibacterial agent is 900 mass ppm or less was confirmed to have excellent antibacterial properties. From the results of Example 3 and Example 4, it was confirmed that if the specific surface area is increased by grinding the silicon nitride powder, the antibacterial properties improve. From the results of Comparative Example 2 and Examples 5-8 shown in Table 2, it was confirmed that washing decreases the content of F and increases the content of ammonia in the liquid phase (content of ammonium ions decreases). Accordingly, the antibacterial agents of Examples 5-8 are thought to have higher antibacterial properties than Comparative Example 2.

**INDUSTRIAL APPLICABILITY**

According to the present disclosure, it is possible to provide an antibacterial agent having excellent antibacterial properties. It is possible to provide a method for using a composition containing silicon nitride as an antibacterial agent having excellent antibacterial properties.

**Claims**

1. An antibacterial agent containing silicon nitride as a main component and having a fluorine content of 900 mass ppm or less.

2. The antibacterial agent according to claim 1, wherein the antibacterial agent is powdery and has a BET specific surface area of 0.5 $m^2$/g or more.

3. The antibacterial agent according to claim 1 or 2, wherein when dispersed in water so as to have a concentration of 6.0 w/v%, after ten minutes have elapsed, a fluorine elution amount to a liquid phase is 250 mass ppm or less.

4. The antibacterial agent according to claim 3, wherein the liquid phase has a pH of 7.0 or more.

5. The antibacterial agent according to claim 1 or 2, wherein when dispersed in water so as to have a concentration of 6.0 w/v%, after ten minutes have elapsed, a content of ammonium ions included in a liquid phase is 6.0 $\mu$g/mL or less and a content of ammonia included in the liquid phase is 0.2 $\mu$g/mL or more.

6. The antibacterial agent according to claim 5, wherein a ratio of the content of ammonia to the content of ammonium ions is 0.10 or more.

7. The antibacterial agent according to claim 1 or 2, wherein the fluorine content is 10 mass ppm or more.

8. The antibacterial according to claim 1 or 2, having a chlorine content of 30 mass ppm or more.

9. A method for using a composition containing silicon nitride as a main component and having a fluorine content of 900 mass ppm or less as an antibacterial agent.

## INTERNATIONAL SEARCH REPORT

| International application No. |
| --- |
| **PCT/JP2024/012068** |

| A. | CLASSIFICATION OF SUBJECT MATTER |
| --- | --- |

*A01N 59/00*(2006.01)i; *A01N 25/12*(2006.01)i; *A01P 3/00*(2006.01)i; *C01B 21/068*(2006.01)i; *C04B 35/584*(2006.01)i
FI: A01N59/00 D; C01B21/068 D; A01P3/00; A01N25/12; C04B35/584

According to International Patent Classification (IPC) or to both national classification and IPC

| B. | FIELDS SEARCHED |
| --- | --- |

Minimum documentation searched (classification system followed by classification symbols)

A01N1/00-65/48; A01P1/00-23/00; C01B21/068; C04B35/584

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115366512 A (ZHEJIANG YASHA DECORATION CO., LTD.) 22 November 2022 (2022-11-22) <br> claims 1, 5, paragraphs [0007], [0015]-[0016], examples 1-3 | 1, 3, 9 |
| A | | 2, 4-8 |
| X | CN 111840652 A (SHANGHAI YUNBANG BIOTECHNOLOGY CO., LTD.) 30 October 2020 (2020-10-30) <br> claims 1-2, paragraphs [0037]-[0039], examples 1-3 | 1-7, 9 |
| A | | 8 |
| A | CN 113248279 A (LI, Shanhua) 13 August 2021 (2021-08-13) <br> claims 1, 5, paragraph [0026], examples 1-3 | 1-9 |
| A | JP 2020-19677 A (FERROTEC CERAMICS CORPORATION) 06 February 2020 (2020-02-06) <br> claims 1-3, 7, examples 1-2 | 1-9 |

✓ Further documents are listed in the continuation of Box C.     ✓ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 May 2024** | **11 June 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT

International application No.

**PCT/JP2024/012068**

### C. DOCUMENTS CONSIDERED TO BE RELEVANT

| Category* | Citation of document, with indication, where appropriate, of the relevant passages | Relevant to claim No. |
|---|---|---|
| A | JP 2022-80053 A (DENKA CO., LTD.) 27 May 2022 (2022-05-27)<br>claims 1, 3-4, paragraphs [0005]-[0006], [0013], [0029]-[0030], [0036]-[0040], [0052]-[0061], examples 1-2 | 1-9 |

Form PCT/ISA/210 (second sheet) (July 2022)

**INTERNATIONAL SEARCH REPORT**
Information on patent family members

International application No.

**PCT/JP2024/012068**

| Patent document cited in search report | | | Publication date (day/month/year) | Patent family member(s) | Publication date (day/month/year) |
|---|---|---|---|---|---|
| CN | 115366512 | A | 22 November 2022 | (Family: none) | |
| CN | 111840652 | A | 30 October 2020 | (Family: none) | |
| CN | 113248279 | A | 13 August 2021 | (Family: none) | |
| JP | 2020-19677 | A | 06 February 2020 | (Family: none) | |
| JP | 2022-80053 | A | 27 May 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015516239 A

- JP 2020512072 A